# EUROPEAN PATENT APPLICATION

(11) **EP 4 206 046 A1**
(43) Date of publication of application: **05.07.2023**
(21) Application number: 22216998.9
(22) Date of filing: 28.12.2022
(51) Int. Cl.: B60T 7/20, B60T 8/32, B60T 13/66

(54) **VEHICLE WITH VALVE THAT ADJUSTS OUTPUT BRAKE PRESSURE ACCORDING TO A PLURALITY OF PRESSURE CURVES**

(30) Priority: 29.12.2021 US 202117564960
(71) Applicant: CNH Industrial Italia S.p.A., 10156 Torino (IT)
(72) Inventor: GAMA, Vinicius Luis, 82010-540 Curitiba (BR); DILLON, Shane P., Naperville, 60565 (US); MARTINHO DE OLIVEIRA, Murilo, 81320-420 Curitiba (BR); CARDOSO DUARTE FILHO, Otacilio, 80540-220 Curitiba (BR); FREISLEBEN, Michael, Homer Glen, 60491 (US)
(74) Representative: CNH Industrial IP Department

(57) **Abstract**

A vehicle (102) includes: a brake pedal (110) to produce vehicle brake pressure; a trailer brake valve (218) to output a variable trailer brake pressure to a trailer brake (220) of a trailer (104), the trailer brake valve (218) configured to output the variable trailer brake pressure as a function of the vehicle brake pressure; and an electronic control unit operably coupled to the trailer brake valve (218) and configured to: output a first valve signal to the trailer brake valve (218) to output the trailer brake pressure according to a first vehicle brake pressure curve; and output a second valve signal to the trailer brake valve (218) to output the trailer brake pressure according to a second vehicle brake pressure curve responsively to determining a curve adjustment condition exists. The first vehicle brake pressure curve and/or the second vehicle brake pressure curve is not a single straight line curve.

## Description

### FIELD OF THE INVENTION

The present disclosure relates to braking systems and methods, and, more particularly, to systems and methods for braking vehicles and coupled trailers.

### BACKGROUND OF THE INVENTION

Vehicle-trailer assemblies include vehicles, such as tractors, used for moving commerce, also simply referred to as tractor trailers, and vehicles used in connection with the agricultural industry, such as a tractor coupled to a trailer via a trailer hitch, tow bar, or other coupling devices, to enable the tractor to tow the trailer. Typically, the vehicle has a braking system that produces braking pressure to activate brakes of the vehicle and may also be coupled to one or more brakes of the trailer to cause braking of the trailer as well. The delivery of braking pressure from the vehicle to the trailer brakes may be controlled by a trailer brake valve of the vehicle. While such assemblies are effective, there are certain situations when the braking pressure delivered to the trailer brake(s) from the trailer brake valve may be too high or too low.

What is needed in the art is a way to deliver braking pressure to one or more trailer brakes of a trailer in an improved manner.

### SUMMARY OF THE INVENTION

Exemplary embodiments provided according to the present disclosure provide a vehicle with an electronic control unit that is configured to adjust a trailer brake valve to output variable trailer brake pressures, which are a function of a vehicle brake pressure, according to different vehicle brake pressure curves.

In some embodiments provided according to the present disclosure, a vehicle includes: a brake pedal configured to produce vehicle brake pressure; a vehicle brake configured to receive the vehicle brake pressure; a final drive coupled to the vehicle brake; a vehicle wheel coupled to the final drive; a trailer brake valve configured to output a variable trailer brake pressure to a trailer brake of a trailer coupled to the vehicle, the trailer brake valve being configured to output the variable trailer brake pressure as a function of the vehicle brake pressure; and an electronic control unit (ECU) operably coupled to the trailer brake valve and configured to: output a first valve signal to the trailer brake valve to cause the trailer brake valve to output the variable trailer brake pressure according to a first vehicle brake pressure curve; determine a curve adjustment condition exists; and output a second valve signal to the trailer brake valve to cause the trailer brake valve to output the variable trailer brake pressure according to a second vehicle brake pressure curve that differs from the first vehicle brake pressure curve responsively to determining the curve adjustment condition exists. At least one of the first vehicle brake pressure curve or the second vehicle brake pressure curve is not a single straight line curve.

In some embodiments provided according to the present disclosure, a vehicle system includes: a vehicle including: a brake pedal configured to produce vehicle brake pressure; a vehicle brake configured to receive the vehicle brake pressure; a final drive coupled to the vehicle brake; a vehicle wheel coupled to the final drive; and a trailer brake valve configured to output a variable trailer brake pressure, the trailer brake valve being configured to output the variable trailer brake pressure as a function of the vehicle brake pressure; a trailer coupled to the vehicle, the trailer including at least one trailer brake coupled to the trailer brake valve so as to receive the output variable trailer brake pressure from the trailer brake valve; and an electronic control unit (ECU) operably coupled to the trailer brake valve and configured to: output a first valve signal to the trailer brake valve to cause the trailer brake valve to output the variable trailer brake pressure according to a first vehicle brake pressure curve; determine a curve adjustment condition exists; and output a second valve signal to the trailer brake valve to cause the trailer brake valve to output the variable trailer brake pressure according to a second vehicle brake pressure curve that differs from the first vehicle brake pressure curve responsively to determining the curve adjustment condition exists. At least one of the first vehicle brake pressure curve or the second vehicle brake pressure curve is not a single straight line curve.

In some embodiments provided according to the present disclosure, a method of adjusting braking performance of a trailer coupled to a vehicle includes: producing vehicle brake pressure by the vehicle; outputting a first trailer brake pressure from a trailer brake valve of the vehicle to at least one trailer brake of the trailer, the output first trailer brake pressure is a function of the vehicle brake pressure that is output according to a first vehicle brake pressure curve; determining a curve adjustment condition exists; and adjusting the trailer brake valve so the trailer brake valve is configured to output a second trailer brake pressure to the at least one trailer brake, the second trailer brake pressure is a function of the vehicle brake pressure and is output according to a second vehicle brake pressure curve that differs from the first vehicle brake pressure curve. At least one of the first vehicle brake pressure curve or the second vehicle brake pressure curve is not a single straight line curve.

A possible advantage that may be realized by embodiments provided according to the present disclosure is that the first vehicle brake pressure curve and the second vehicle brake pressure curve can each be tailored to different conditions, such as differing loads of the trailer, so braking performance can be improved in the different conditions.

Another possible advantage that may be realized by embodiments provided according to the present disclosure is that the trailer brake valve can be conveniently controlled by the ECU to alter braking performance, allowing adjustment of the trailer brake valve without prolonged stoppage of the vehicle.

Yet another possible advantage that may be realized by embodiments provided according to the present disclosure is that the ECU can be configured to allow a user to define when one or more of the vehicle brake pressure curves is used, which may improve user comfort and satisfaction with the braking performance.

### BRIEF DESCRIPTION OF THE DRAWINGS

For the purpose of illustration, there are shown in the drawings certain embodiments of the present invention. It should be understood, however, that the invention is not limited to the precise arrangements, dimensions, and instruments shown. Like numerals indicate like elements throughout the drawings. In the drawings:
FIG. 1 is a perspective view of an exemplary embodiment of a system including a trailer coupled to a vehicle, provided according to the present disclosure;
FIG. 2 is a schematic drawing of an exemplary embodiment of a braking system for use with the system of FIG. 1, provided according to the present disclosure;
FIG. 3 illustrates several vehicle brake pressure curves that may be utilized according to the present disclosure;
FIG. 4 illustrates an exemplary embodiment of a graphical user interface that may be presented on a display of the vehicle of FIG. 1; and
FIG. 5 is a flow chart illustrating a method of adjusting braking performance of the trailer coupled to the vehicle of FIG. 1, provided according to the present disclosure.

### DETAILED DESCRIPTION OF THE INVENTION

The terms "fore", "aft", "left" and "right", when used in connection with a vehicle assembly and/or components thereof are usually determined with reference to the direction of forward operative travel of the vehicle assembly, but they should not be construed as limiting. The terms "longitudinal" and "transverse" are determined with reference to the fore-and-aft direction of the vehicle assembly and are equally not to be construed as limiting.

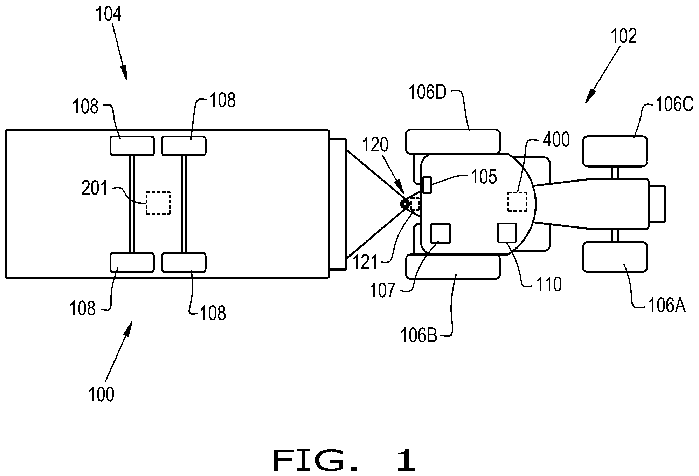

Referring now to the drawings, and more particularly to FIG. 1, there is shown an exemplary embodiment of a system 100 in the form of a vehicle-trailer assembly 100, according to the present disclosure. The system includes a vehicle 102, which may be in the form of a tractor as illustrated, and a trailer 104 coupled to the vehicle 102. As the vehicle 102 is illustrated as a tractor, further description of the system 100 uses the terms "vehicle" and "tractor" interchangeably; however, it should be appreciated that the vehicle 102 provided according to the present disclosure may be a different type of vehicle, such as a semi-truck, and is not limited to being a tractor. In some embodiments, the vehicle 102 and the trailer 104 are mechanically coupled together, for example with a draw bar, or other well know coupling assemblies, such as a quick coupler 105 that may include electrical and/or hydraulic connections. For example, the quick coupler 105 may include an ISOBus. The vehicle 102 includes vehicle wheels 106 and the trailer 104 includes trailer wheels 108. Although the trailer 104, as illustrated, is a dual axel trailer having four trailer wheels 108, the scope of the present disclosure includes the trailer 104 having only a single axle with two trailer wheels 108 or more than two axels and four wheels. Furthermore, the vehicle 102 includes a at least one brake pedal 110 configured to be depressed by an operator of the vehicle 102 for generating a brake pressure for use in braking one or more of the vehicle wheels 106 and may be piloted for use in braking one or more of the trailer wheels 108 of the trailer 104. The system 100 includes an electronic control unit (ECU) 107, which will be discussed in greater detail further herein. As illustrated, the ECU 107 is part of the vehicle 102, but it should be appreciated that the ECU 107 may be part of the trailer 104 or remote from the vehicle 102 and the trailer 104.

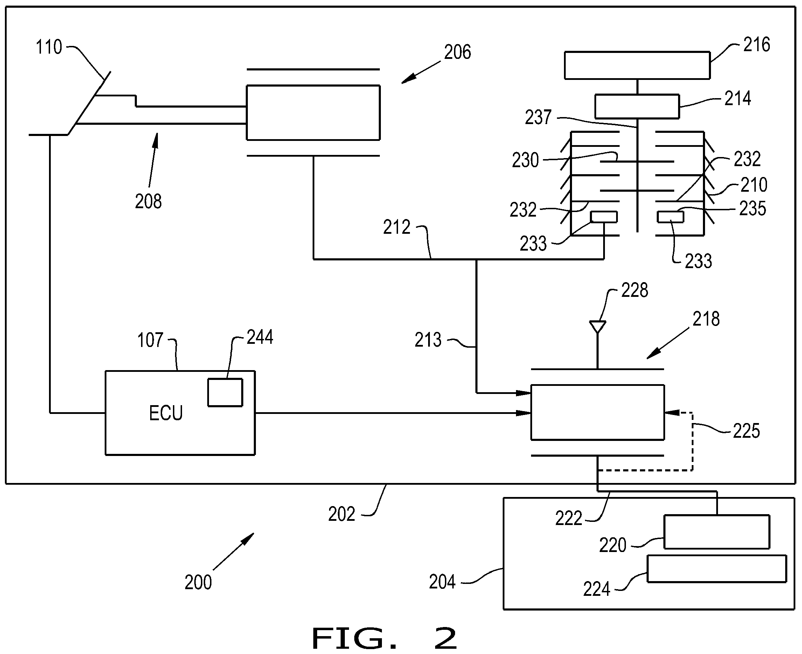

FIG. 2 is a schematic drawing of an exemplary embodiment of a braking system 200 for use with the system 100 of FIG. 1, provided according to the present disclosure. As illustrated, the braking system 200 includes a vehicle braking section 202 (also referred to as vehicle braking circuitry) and a trailer braking section 204 (also referred to as trailer braking circuitry). The vehicle braking section 202 includes the brake pedal 110, a master cylinder 206 (also referred to as a vehicle brake valve) mechanically coupled to the brake pedal 110 via a mechanical coupling 208 such as a rod linkage assembly (or electrically coupled to the brake pedal), a vehicle brake 210 coupled to the master cylinder 206 via a brake line 212 (e.g., a hydraulic brake line), a final drive 214 coupled to the vehicle brake 210, and a vehicle wheel 216 coupled to the final drive 214. In some embodiments, the vehicle wheel 216 corresponds to one of the two rear vehicle wheels 106B, 106D (FIG. 1) of the vehicle 102, however the scope of the invention covers a vehicle braking section 202 configured for braking all four vehicle wheels 106A, 106B, 106C, 106D, or a vehicle braking section 202 having two brake pedals 110, one for braking either the left rear vehicle wheel 106D or the left vehicle wheels 106C, 106D, and the other for braking the right rear vehicle wheel 106B or the right vehicle wheels 106A, 106B. Although not depicted by FIG. 2 for ease of illustration, the scope of invention covers the pedal 110 configured to brake both rear vehicle wheels 106B, 106D via the brake line 212.

The brake pedal 110, when depressed, actuates the master cylinder 206 to produce a vehicle brake pressure (e.g., a hydraulic vehicle brake pressure) in the brake line 212 for activating the vehicle brake 210. The vehicle brake 210 brakes the rear axle 237, and the final drive 214 couples the braking action on the rear axle 237 to a braking action on the vehicle wheel 216 (e.g., on the rear wheels 106B, 106D). Braking assemblies including final drives and wheels are well known and will not be described in further detail. It should be appreciated that while the brake pedal 110 appears in the form of a foot-operated pedal that is mounted to the floor of the vehicle 102, in some embodiments the brake pedal 110 is hand-operated, e.g., a joystick, and may be part of an assembly that controls both propulsion and braking of the vehicle 102. Thus, the brake pedal 110 provided according to the present disclosure may be any element that, when activated, produces vehicle brake pressure that may be used to brake the vehicle 102 and the trailer 104.

The vehicle braking section 202 also includes a trailer brake valve 218 coupled to the master cylinder 206 via a pilot brake line 213 for piloting the vehicle brake pressure to the trailer brake valve 218 and the ECU 107 may be configured to receive a brake signal from the brake pedal 110 of the vehicle 102 that is representative of the vehicle brake pressure applied to the vehicle brake 210 for braking the vehicle wheel 216. In some embodiments, the brake signal is an electrical signal generated by a transducer (not shown), such as an electromechanical sensor coupled between the mechanical linkage 208 of the brake pedal 110 and the ECU 107, as is known in the art.

The trailer braking section 204 includes at least one trailer brake 220 and a trailer wheel 224 (e.g., one of the trailer wheels 108 of FIG. 1) coupled to the trailer brake 220. The trailer brake 220 is coupled to the trailer brake valve 218 via a trailer brake line 222. In some embodiments, the trailer brake valve 218 is coupled to each trailer wheel 108 via corresponding trailer brakes 220, but for ease of illustration, only one trailer wheel 224 is depicted in FIG. 2. The trailer braking section 204 may optionally include a feedback circuit 225 configured to feedback the pressure in the trailer brake line 222 to the trailer brake valve 218 for refining adjustments of the trailer brake valve 218 to maintain an appropriate pressure in the trailer brake line 222.

In some embodiments, upon activation of the vehicle brake 210, the vehicle brake pressure is piloted to the trailer brake valve 218 via the pilot brake line 213. The trailer brake valve 218 also receives the trailer brake valve control signal from the ECU 107 for controlling application of the piloted vehicle brake pressure to the trailer brake valve 218 for adjusting (or setting) the trailer brake pressure in the trailer brake line 222 to the defined pressure for activating the one or more trailer brakes 220. In some embodiments, the trailer braking section 204 includes a source of trailer brake pressure 228 (e.g., a trailer brake pump) configured to receive the trailer brake valve control signal from the ECU 107 for adjusting (or setting) the trailer brake pressure in the trailer brake line 222 to the defined pressure for activating the one or more trailer brakes 220. In some embodiments, the source of trailer brake pressure 228 can maintain a pressure in the trailer brake line 222.

FIG. 2 shows the vehicle brake 210 including one or more brake frictional plates 230, one or more steel plates (sometimes referred to as separate plates) 232 coupled to a housing or chassis of the tractor 102, and a piston 233 (having a cross-section area 235) configured to receive the tractor brake pressure and apply the tractor brake pressure (via the one or more steel plates 232 or alternatively via the one or more steel plates 232 in combination with one or more brake pads (not shown), for example) to the brake frictional plates 230. An axle 237 (FIG. 2) (e.g., a rear axle) of the tractor 102 may pass through space defined by an inner radius of the brake frictional plate 230, and the brake fictional plate 230 may be secured or otherwise mounted via fastening hardware to the axle 237.

In known braking assemblies, the trailer brake valve may be configured to output trailer brake pressure to the trailer brake(s) as a function of the vehicle brake pressure. For example, the trailer brake valve may be configured to output trailer brake pressure in a 1.5: 1 relationship with the vehicle brake pressure so the trailer brake pressure output to the trailer brake(s) is equal to two-thirds the vehicle brake pressure supplied to the vehicle brake(s). While such assemblies are effective to stop the vehicle and trailer, there have been issues identified with such an arrangement.

One particular issue that has been found is that the set function for the trailer brake pressure from the vehicle brake pressure may not always be ideal for the operating conditions. For example, if the trailer is heavily loaded, the trailer brake pressure output by the trailer brake valve may not be as high as the user desires even if the set function was acceptable when the trailer was less loaded. The user may thus believe that the braking performance is not "aggressive" enough when the trailer is loaded. On the other hand, if the trailer brake valve were configured to have a set function that were more aggressive, i.e., the trailer brake pressure was closer to equal to or even greater than the vehicle brake pressure, the user may believe that the braking performance is too aggressive when the trailer is less loaded or even empty.

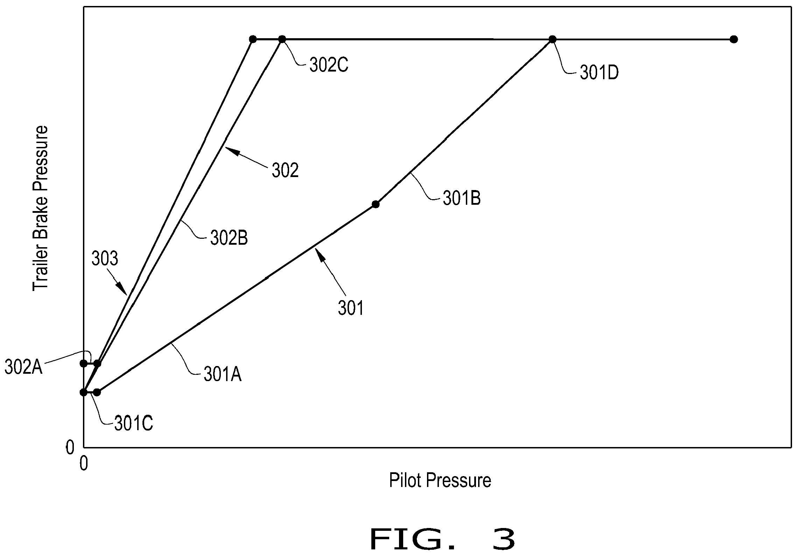

To address some of the previously described issues, and referring now to FIG. 3 as well, the trailer brake valve 218 provided according to the present disclosure is configured to output a variable trailer brake pressure to one or more of the trailer brakes 220 as a function of the vehicle brake pressure and the ECU 107 is operably coupled to the trailer brake valve 218. The ECU 107 is configured to output a first valve signal to the trailer brake valve 218 to cause the trailer brake valve 218 to output the variable trailer brake pressure according to a first vehicle brake pressure curve 301. As illustrated in FIG. 3, the first vehicle brake pressure curve 301 represents the value of the trailer brake pressure, illustrated on the Y-axis, as a function of the vehicle brake pressure, illustrated on the X-axis, so the output trailer brake pressure depends on the vehicle brake pressure. The ECU 107 is configured to determine a curve adjustment condition exists and to output a second valve signal to the trailer brake valve 218 to cause the trailer brake valve 218 to output the variable trailer brake pressure according to a second vehicle brake pressure curve 302 that differs from the first vehicle brake pressure curve responsively to determining the curve adjustment condition exists. The first vehicle brake pressure curve 301 and/or the second vehicle brake pressure curve 302 is not a single straight line curve, as illustrated, so the output trailer brake pressure is not a simple proportion of the vehicle brake pressure. The first vehicle brake pressure curve 301 and/or the second vehicle brake pressure curve 302, illustrated as just the first vehicle brake pressure curve 301 in FIG. 3, may comprise a first linear relationship curve 301A and a second linear relationship curve 301B where the relationship between the vehicle brake pressure and the trailer brake pressure differs from the first linear relationship curve 301A. Such a pressure curve may provide smoother braking at lower pressures and more aggressive braking at higher pressures. Each of the vehicle brake pressure curves 301, 302 may also include one or more constant relationship curves 301C, 302A where the trailer brake pressure does not increase with increasing vehicle brake pressure, followed by one or more linear relationship curves 301A, 301B, 302B. In some embodiments, one or more of the vehicle brake pressure curves 301, 302 may define a maximum trailer brake pressure 302C, 301D where increased vehicle brake pressure does not increase the trailer brake pressure. In some embodiments, one or more of the vehicle brake pressure curves 301, 302 may be partially or completely exponential so the output trailer brake pressure increases exponentially with the vehicle brake pressure. By configuring the ECU 107 to output valve signals to the trailer brake valve 218 so the trailer brake valve 218 outputs trailer brake pressure according to different vehicle brake pressure curves 301, 302 responsively to determining a curve adjustment condition exists, the ECU 107 can adjust the braking performance of the system 100 responsively to differing conditions, as will be described further herein, so the braking performance is better suited for the different condition(s). The vehicle brake pressure curves 301, 302 may be stored in a memory 244 of the ECU 107 and adjusted by the ECU 107 or otherwise to provide desired braking performance.

In some embodiments, the ECU 107 is configured to determine the curve adjustment condition exists based on a weight of the trailer 104. For example, the ECU 107 may be configured to receive a trailer weight signal corresponding to a trailer weight of the coupler trailer 104 and determine the curve adjustment condition exists based at least partially on the trailer weight being greater than a defined weight. The ECU 107 may initially output the first valve signal to the trailer brake valve 218 so the trailer brake valve 218 is configured to output the trailer brake pressure according to the first vehicle brake pressure curve 301 when the trailer 104 is not heavily loaded, which is when the user may desire less aggressive braking of the trailer 104. When the trailer 104 becomes more heavily loaded, such as loaded to the point where the trailer 104 exceeds the defined weight, the ECU 107 may receive the trailer weight signal, determine the trailer weight exceeds the defined weight, and output the second valve signal to the trailer brake valve 218 so the trailer brake valve 218 is configured to output the trailer brake pressure according to the second vehicle brake pressure curve 302, which has a steeper curve portion 302B than a corresponding curve portion 301A of the first vehicle brake pressure curve 301 and thus provides more aggressive braking. Since the trailer 104 is generally more difficult to brake when more heavily loaded due to inertia, the more aggressive braking performance of the second vehicle brake pressure curve 302 can allow the user to brake the vehicle 102 and the trailer 104 more quickly than if the trailer brake valve 218 was outputting trailer brake pressure according to the first vehicle brake pressure curve 301.

The ECU 107 may determine the weight of the trailer 104 in a variety of ways. In some embodiments, the trailer 104 includes one or more trailer weight sensors 201 that are configured to output the trailer weight signal. The ECU 107 may be operably coupled to the trailer weight sensor(s) 201 and determine the curve adjustment condition exists based on the trailer weight signal received from the trailer weight sensor(s) 201.

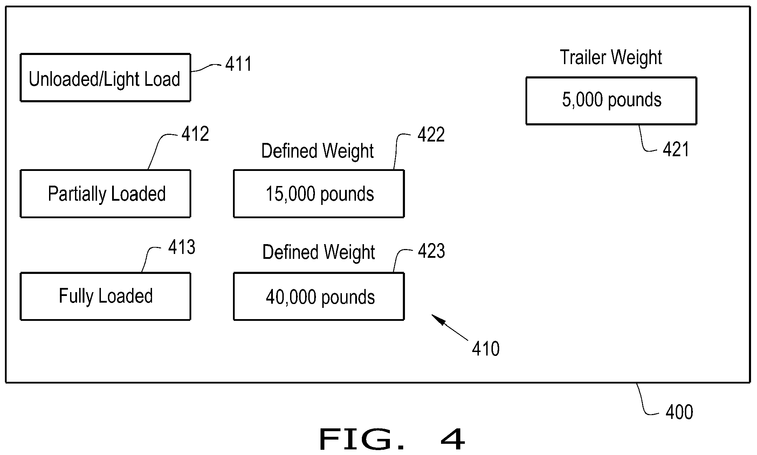

In some embodiments, and referring now to FIG. 4 as well, the vehicle 102 includes a display 400 that presents a graphical user interface (GUI) 410 and is operably coupled to the ECU 107 for controlling various aspects of the system 100. As illustrated, the GUI 410 may present several icons 411, 412, 413 that represent various loading states of the trailer 104. For example, the icon 411 may indicate that the trailer 104 is unloaded or lightly loaded; the icon 412 may indicate that the trailer 104 is partially loaded; and the icon 413 may indicate that the trailer 104 is fully loaded, with the user selecting the appropriate icon 411, 412, 413 for the load level of the trailer 104 and/or the desired braking performance. A user may select the icon 411, for example, when the trailer 104 is unloaded or lightly loaded, causing the display 400 to output a first signal to the ECU 107 that causes the ECU 107 to responsively output the first valve signal to the trailer brake valve 218 so the trailer brake valve 218 outputs the trailer brake pressure according to the first vehicle brake pressure curve 301. When the trailer 104 becomes more full and/or the user desires more aggressive braking performance, the user can select the icon 412 to cause the display to output a second signal, which may also be referred to as a curve adjustment signal, to the ECU 107 that causes the ECU 107 to determine that the curve adjustment condition exists and output the second valve signal to the trailer brake valve 218 so the trailer brake valve 218 outputs the trailer brake pressure according to the second vehicle brake pressure curve 302. In this respect, the display 400 may be configured to output the curve adjustment signal to the ECU 107.

In some embodiments, the ECU 107 is configured to determine a second curve adjustment condition exists and output a third valve signal to the trailer brake valve 218 to cause the trailer brake valve 218 to output the variable trailer brake pressure according to a third vehicle brake pressure curve 303 that differs from the first vehicle brake pressure curve 301 and the second vehicle brake pressure curve 302 responsively to determining the second curve adjustment condition exists. The ECU 107 may determine the second curve adjustment condition exists, for example, when a user selects the icon 413 in the GUI 410, prompting the display 400 to output a second curve adjustment signal to the ECU 107. As previously described, the icon 413 may be presented to the user as corresponding to a braking performance setting that is suited for use when the trailer 104 is heavily/fully loaded and/or the user desires even more aggressive braking performance. It should be appreciated that while the icons 411, 412, 413 are illustrated and described as presenting descriptions about the load level of the trailer 104, in some embodiments the icons 411, 412, 413 present descriptions about other driving characteristics and/or user preference, e.g., road conditions, desired braking performance, etc. The user may thus select one of the icons 411, 412, 413 to alter the vehicle brake pressure curve followed by the trailer brake valve 218 and adjust the braking performance of the system 100 in a convenient manner.

In some embodiments, the ECU 107 is configured to receive a defined weight adjustment signal and adjust the defined weight that is used to determine when a curve adjustment condition exists. Referring still to FIG. 4, the GUI 410 may include a weight icon 421 and a defined weight icon 422. A user may input a weight of the trailer 104, such as a load weight of the trailer 104, using the weight icon 421, which the ECU 107 may then receive as the trailer weight signal. In some embodiments, the input into the weight icon 421 corresponds just to the weight of loaded items in the trailer 104, so the ECU 107 is configured to factor in an empty trailer weight when determining the trailer weight of the trailer 104 based on the received signal. Alternatively or in addition, the ECU 107 may be configured to output a weight display signal to the display 400 so the weight of the trailer 104 is automatically displayed by the weight icon 421, assisting a user to select the desired braking performance based on the weight. In some embodiments, the defined weight icon 422 may present the defined weight at which the ECU 107 determines a curve adjustment condition exists and outputs the second valve signal to the trailer brake valve 218 so the trailer brake valve 218 outputs the trailer brake pressure according to the second vehicle brake pressure curve 302. Further, a user may select the defined weight icon 422 to adjust the defined weight and thus adjust the weight of the trailer 104 that causes the ECU 107 to output the second valve signal to the trailer brake valve 218. The GUI 410 may also display a second defined weight icon 423 corresponding to the fully loaded weight, i.e., to when the second curve adjustment condition exists. It should be appreciated that the ECU 107 may be configured to receive further defined weight signals from the display 400, or another element, to define further weights that cause the ECU 107 to determine another curve adjustment condition exists, such as the second curve adjustment condition, and output corresponding valve signals to the trailer brake valve 218 so the trailer brake valve 218 outputs trailer brake pressure according to the corresponding vehicle brake pressure curve(s).

The trailer 104 may be coupled to a draw bar 120 of the vehicle 102 and a draw bar load sensor 121 may be coupled to the draw bar 120 and operably coupled to the ECU 107. The draw bar load sensor 121 may be configured to output a draw bar load signal to the ECU 107 that corresponds to a draw bar load exerted on the draw bar 120. The ECU 107 may be configured to determine the curve adjustment condition exists when the draw bar load is greater than a defined draw bar load. The load experienced at the draw bar 120 may be due to a mismatch in deceleration of the vehicle 102 and the trailer 104; if the vehicle 102 and the trailer 104 decelerate at the same rate, there may be little load experienced by the draw bar 120. By having the ECU 107 configured to determine the curve adjustment condition exists when the draw bar load on the draw bar 120 exceeds the defined draw bar load, the ECU 107 can output a respective valve signal to the trailer brake valve 218 in order to adjust braking performance so the vehicle 102 and the trailer 104 decelerate more similarly. In such embodiments, a user may accelerate the vehicle 102 to a test speed and activate the brake pedal 110 to stop the vehicle 102 and the trailer 104. Based on the load experienced in the draw bar 120 as the vehicle 102 and the trailer 104 decelerate to a stop, the ECU 107 may determine if a valve signal should be output to the trailer brake valve 218 in order to adjust the braking performance. It should thus be appreciated that the ECU 107 may be configured to determine the curve adjustment condition exists in a variety of ways in addition, or alternatively, to determining the weight of the trailer 104.

From the foregoing, it should be appreciated that the system 100 provided according to the present disclosure has an ECU 107 that can output on or more valve signals to control the trailer brake valve 218 and adjust the braking performance of the trailer 104 in response to various conditions. Controlling the trailer brake valve 218 in this manner can allow a user to choose the aggressiveness of the braking and, in some embodiments, may be performed by the ECU 107 without user input so the system 100 operates according to manufacturer settings. The system 100 can thus improve user comfort and perception with the braking performance due to the trailer brake valve 218 being adjustable to different conditions.

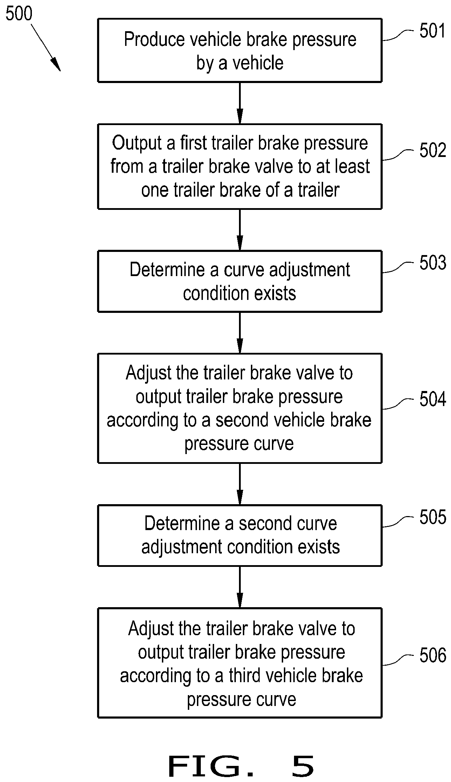

In some embodiments provided according to the present disclosure, and referring now to FIG. 5, a method 500 of adjusting braking performance of the trailer 104 coupled to the vehicle 102 is provided. The method 500 includes producing 501 vehicle brake pressure by the vehicle 102; outputting 502 a first trailer brake pressure from the trailer brake valve 218 to at least one trailer brake 220 of the trailer 102, the output first trailer brake pressure being a function of the vehicle brake pressure that is output according to the first vehicle brake pressure curve 301; determining 503 a curve adjustment condition exists; and adjusting 504 the trailer brake valve 218 so the trailer brake valve 218 is configured to output a second trailer brake pressure to the trailer brake(s) 220 responsively to determining 503 the curve adjustment condition exists, the second trailer brake pressure being a function of the vehicle brake pressure and being output according to the second vehicle brake pressure curve 302 that differs from the first vehicle brake pressure curve 301. As previously described, the first vehicle brake pressure curve 301 and/or the second vehicle brake pressure curve 302 is not a single straight line curve. Determining 503 the curve adjustment condition exists may be performed, for example, by the ECU 107, which may be configured to determine 503 the curve adjustment condition exists in a variety of ways as previously described. The method 500 may further include determining 505 a second curve adjustment condition exists and adjusting 506 the trailer brake valve 218 so the trailer brake valve 218 outputs the trailer brake pressure according to a third vehicle brake pressure curve 303 that differs from the first vehicle brake pressure curve 301 and the second vehicle brake pressure curve 302 responsively to determining 505 the second curve adjustment condition exists.

It is to be understood that some or all of the steps of the methods 500 may be performed by the ECU 107 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the ECU 107 described herein, such as some or all steps of the method 500, is implemented in software code or instructions which are tangibly stored on a tangible computer readable medium. The ECU 107 loads the software code or instructions via a direct interface with the computer readable medium or via a wired and/or wireless network. Upon loading and executing such software code or instructions by the ECU 107, the ECU 107 may perform any of the functionality of the ECU 107 described herein, including some or all steps of the method 500 described herein.

## Claims

1. A vehicle system (100), comprising:
a vehicle (102) comprising:
a brake pedal (110) configured to produce vehicle brake pressure;
a vehicle brake configured to receive the vehicle brake pressure;
a final drive (214) coupled to the vehicle brake;
a vehicle wheel (2016, 106A-D) coupled to the final drive (214); and
a trailer brake valve (218) configured to output a variable trailer brake pressure, the trailer brake valve (218) being configured to output the variable trailer brake pressure as a function of the vehicle brake pressure; and
an electronic control unit (ECU 107) operably coupled to the trailer brake valve (218) and configured to:
output a first valve signal to the trailer brake valve (218) to cause the trailer brake valve (218) to output the variable trailer brake pressure according to a first vehicle brake pressure curve;
determine a curve adjustment condition exists; and
output a second valve signal to the trailer brake valve (218) to cause the trailer brake valve (218) to output the variable trailer brake pressure according to a second vehicle brake pressure curve that differs from the first vehicle brake pressure curve responsively to determining the curve adjustment condition exists, wherein at least one of the first vehicle brake pressure curve or the second vehicle brake pressure curve is not a single straight line curve.

2. The system of (100) claim 1, wherein the ECU 107 is configured to receive a trailer weight signal corresponding to a trailer weight of a trailer (104) and determine the curve adjustment condition exists based at least partially on the trailer weight being greater than a defined weight.

3. The system of (100) claim 2, wherein the ECU 107 is configured to receive a defined weight adjustment signal and adjust the defined weight responsively to receiving the defined weight adjustment signal.

4. The system of (100) any of the preceding claims, wherein the second vehicle brake pressure curve at least partially defines a steeper curve than the first vehicle brake pressure curve.

5. The system of (100) any of the preceding claims, wherein at least one of the first vehicle brake pressure curve or the second vehicle brake pressure curve comprises a first linear relationship curve and a second linear relationship curve.

6. The system of (100) any of the preceding claims, wherein the ECU 107 is further configured to receive a curve adjustment signal and determine the curve adjustment condition exists upon receiving the curve adjustment signal.

7. The system of (100) claim 6, further comprising a display operably coupled to the ECU 107 and configured to output the curve adjustment signal to the ECU 107.

8. The system of (100) any of the preceding claims, wherein the ECU 107 is further configured to:
determine a second curve adjustment condition exists; and
output a third valve signal to the trailer brake valve (218) to cause the trailer brake valve (218) to output the variable trailer brake pressure according to a third vehicle brake pressure curve that differs from the first vehicle brake pressure curve and the second vehicle brake pressure curve responsively to determining the second curve adjustment condition exists.

9. The system of (100) any of the preceding claims, further comprising a draw bar coupled to a trailer (104) and a draw bar load sensor coupled to the draw bar, operably coupled to the ECU 107, and configured to output a draw bar load signal to the ECU 107 that corresponds to a draw bar load, the ECU 107 being configured to determine the curve adjustment condition exists when the draw bar load is greater than a defined draw bar load.

10. The system of (100) any of the preceding claims, further comprising a trailer (104) coupled to the vehicle (102), the trailer (104) comprising at least one trailer brake (220) coupled to the trailer brake valve (218) so as to receive the output variable trailer brake pressure from the trailer brake valve (218).

11. A method of adjusting braking performance of a trailer (104) coupled to a vehicle (102), the method comprising:
producing vehicle brake pressure by the vehicle (102);
outputting a first trailer brake pressure from a trailer brake valve (218) of the vehicle (102) to at least one trailer brake (220) of the trailer (104), wherein the output first trailer brake pressure is a function of the vehicle brake pressure that is output according to a first vehicle brake pressure curve;
determining a curve adjustment condition exists; and
adjusting the trailer brake valve (218) so the trailer brake valve (218) is configured to output a second trailer brake pressure to the at least one trailer brake (220), wherein the second trailer brake pressure is a function of the vehicle brake pressure and is output according to a second vehicle brake pressure curve that differs from the first vehicle brake pressure curve, wherein at least one of the first vehicle brake pressure curve or the second vehicle brake pressure curve is not a single straight line curve.
